(19) Europäisches Patentamt
European Patent Office
Office européen des brevets

(11) **EP 4 113 895 A1**

(12) **DEMANDE DE BREVET EUROPEEN**

(43) Date de publication:
**04.01.2023 Bulletin 2023/01**

(51) Classification Internationale des Brevets (IPC):
***H04L 9/06*** *(2006.01)*      ***H04L 9/00*** *(2022.01)*

(21) Numéro de dépôt: **22180067.5**

(52) Classification Coopérative des Brevets (CPC):
**H04L 9/0618; H04L 9/003;** H04L 2209/046

(22) Date de dépôt: **21.06.2022**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **29.06.2021 FR 2106977**

(71) Demandeur: **STMicroelectronics (Rousset) SAS 13790 Rousset (FR)**

(72) Inventeurs:
- **LANDRY, Simon 13100 AIX-EN-PROVENCE (FR)**
- **LINGE, Yanis 13710 FUVEAU (FR)**

(74) Mandataire: **Cabinet Beaumont 4, Place Robert Schuman B.P. 1529 38025 Grenoble Cedex 1 (FR)**

(54) **PROTECTION DE DONNÉES TRAITÉES PAR UN ALGORITHME DE CHIFFREMENT PAR BLOC**

(57) La présente description concerne un procédé de protection d'une première donnée (x) appliquée à un algorithme cryptographique, exécuté par un processeur, dans lequel ledit algorithme est un algorithme par tour, chaque tour traitant des contenus de premier, deuxième et troisième registres (20, 21, 22), le contenu du deuxième registre (21) étant, lors des tours d'une première parité, masqué par le contenu d'un quatrième registre (24) et le contenu du troisième registre (22) étant, lors des tours d'une deuxième parité, masqué par le contenu d'un cinquième registre (25)

**Fig. 3**

EP 4 113 895 A1

**Description**

Domaine technique

La présente description concerne de façon générale la protection de données et plus particulièrement le traitement d'un chiffrement de données par un algorithme de chiffrement par bloc.

Technique antérieure

Un algorithme de chiffrement par bloc s'exécute en une succession de tours. A chaque tour, des opérations de chiffrement sont effectuées sur des blocs d'une donnée à chiffrer. Les opérations de chiffrement dépendent en outre, d'une clef de cryptage elle-même dépendant du rang du tour.
Néanmoins, les algorithmes de chiffrement par bloc sont sensibles aux attaques par canaux cachés. Ces attaques consistent à exploiter des informations telles qu'un temps de calcul ou d'exécution de l'algorithme par un processeur, une consommation électrique du dispositif électronique dans lequel l'algorithme s'exécute. L'attaquant en déduit alors la valeur d'au moins une partie d'une ou plusieurs données utilisées par l'algorithme (comme, par exemple, une clef de chiffrement). Une contre-mesure à ce type d'attaque consiste à masquer les données d'entrée traitées par l'algorithme.

Résumé de l'invention

Il existe un besoin d'améliorer la protection des données traitées par des algorithmes de chiffrement par bloc.
Un mode de réalisation pallie tout ou partie des inconvénients des procédés connus de protection de données traitées par un algorithme de chiffrement par bloc.
Un mode de réalisation prévoit un procédé de protection d'une première donnée appliquée à un algorithme cryptographique, exécuté par un processeur, dans lequel ledit algorithme est un algorithme par tour, chaque tour traitant des contenus de premier, deuxième et troisième registres, le contenu du deuxième registre étant, lors des tours d'une première parité, masqué par le contenu d'un quatrième registre et le contenu du troisième registre étant, lors des tours d'une deuxième parité, masqué par le contenu d'un cinquième registre.
Un mode de réalisation prévoit un processeur mettant en œuvre un algorithme cryptographique par tour configuré pour protéger une première donnée, chaque tour traitant des contenus de premier, deuxième et troisième registres, le contenu du deuxième registre étant, lors des tours d'une première parité, masqué par le contenu d'un quatrième registre et le contenu du troisième registre étant, lors des tours d'une deuxième parité, masqué par le contenu d'un cinquième registre.
Selon un mode de réalisation, les contenus des premier, deuxième et troisième registres pour le premier tour sont, respectivement :

- ladite première donnée masquée par un premier masque ;
- un deuxième masque ; et
- le premier masque masqué par un troisième masque.

Selon un mode de réalisation, le contenu du premier registre suite à l'exécution du dernier tour fournit le résultat de l'application de l'algorithme à la première donnée.
Selon un mode de réalisation, pour chaque tour de première parité, un quatrième masque est généré par un générateur aléatoire et est stocké dans le quatrième registre et pour chaque tour de deuxième parité, un cinquième masque est généré par le générateur et est stocké dans le cinquième registre.
Selon un mode de réalisation, pour chaque tour

a) le contenu du premier registre est inversé modulo un polynôme premier ; puis
b) le contenu du premier registre est masqué par les contenus des deuxième et troisième registres.

Selon un mode de réalisation, pour chaque tour, suite aux étapes a) et b), des opérations cryptographiques sont effectuées sur le contenu du premier registre.
Selon un mode de réalisation, à chaque tour, l'inversion du contenu du premier registre est mise en œuvre par une implémentation à seuil par boîtes.
Selon un mode de réalisation, le polynôme premier modulo lequel est calculé l'inverse du contenu du premier registre est fonction de l'algorithme mis en œuvre.
Selon un mode de réalisation, les tours de première parité sont les tours de rang impair et les tours de deuxième parité sont les tours de rang pair.

Selon un mode de réalisation, les tours de première parité sont les tours de rang pair et les tours de deuxième parité sont les tours de rang impair.

Selon un mode de réalisation, en sortie du dernier tour, le premier registre contient une deuxième donnée masquée par un sixième masque.

Selon un mode de réalisation, la deuxième donnée correspond à la première donnée chiffrée.

Selon un mode de réalisation, le sixième masque est une combinaison multiplicative du troisième masque avec le contenu du deuxième registre ou de l'inverse du troisième masque avec le contenu du troisième registre, selon que le dernier tour soit de première ou de deuxième parité.

Selon un mode de réalisation, l'algorithme cryptographique utilisé est l'AES.

Selon un mode de réalisation, l'algorithme cryptographique utilisé est le SM4.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un exemple d'un dispositif électronique du type auquel s'appliquent les modes de réalisation décrits ;

la figure 2A représente de façon schématique et sous forme de blocs un exemple illustrant un mode de mise en œuvre du procédé décrit ;

la figure 2B représente de façon schématique et sous forme de blocs un autre exemple illustrant un mode de mise en œuvre du procédé décrit ;

la figure 3 est un organigramme représentant des étapes d'un mode de mise en œuvre du procédé décrit ;

la figure 4 est un schéma-bloc illustrant un exemple d'algorithme de chiffrement du type auquel s'appliquent les modes de réalisations décrits ; et

la figure 5 est un schéma-bloc illustrant un exemple d'application, par l'algorithme illustré en figure 4, des modes de réalisations décrits.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits électroniques (processeurs, mémoires, ou machines d'états) adaptés à la mise en œuvre n'ont pas été détaillés. Les modes de réalisation décrits étant compatibles avec l'utilisation de circuits électroniques usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

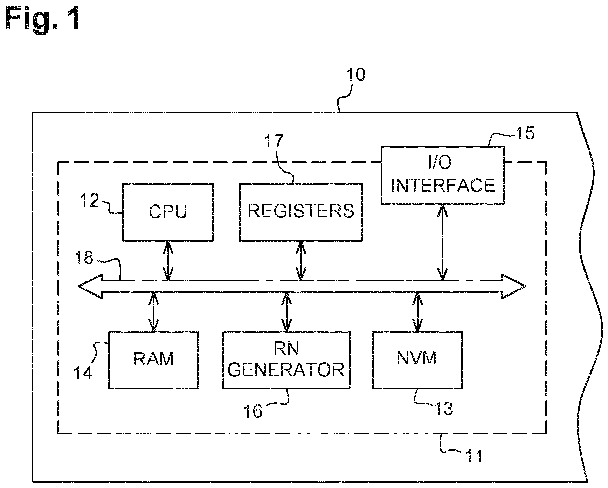

La figure 1 représente un exemple d'un dispositif électronique 10 du type auquel s'appliquent les modes de réalisation décrits.

Le dispositif électronique 10 comprend un circuit intégré 11.

Le circuit 11 comprend par exemple un processeur 12 (CPU) couplé, par l'intermédiaire d'un ou plusieurs bus 18 d'adresses, de données et/ou de commandes, à une ou plusieurs mémoires volatiles ou non volatiles, par exemple une mémoire volatile 14 (RAM) et une mémoire non volatile 13 (NVM), par exemple une mémoire flash. Le processeur 12 exploite par ailleurs d'autres éléments de mémorisation et notamment des registres (bloc 17, REGISTERS). Le bus 18 relie également les circuits internes au circuit 11 à une interface d'entrée/sortie 15 (I/O INTERFACE) et, dans l'application visée, à un ou plusieurs générateurs de nombres aléatoires 16 (RN GENERATOR). D'autres fonctions (non représentées) peuvent être mises en œuvre par le circuit 11.

Le processeur 12 est configuré pour exécuter un algorithme de chiffrement décrit par des codes d'instructions par exemple stockés dans la mémoire non volatile 13.

Le générateur de nombres aléatoires 16 est un générateur de nombres pseudo-aléatoires, par exemple un générateur congruentiel linéaire, utilisant des suites récursives arithmétiques ayant un comportement désordonné et ayant une période suffisamment longue pour paraitre aléatoire. La qualité d'un tel générateur dépend notamment des paramètres arithmétiques utilisés. Selon un autre mode de réalisation, le générateur 16 est un générateur de nombres aléatoires utilisant une source physique aléatoire basée, par exemple sur des propriétés intrinsèques du matériau sur lequel il est implanté.

Selon les modes de réalisation décrits, des données, par exemple stockées dans la mémoire volatile 14, sont destinées à être chiffrées par l'algorithme de chiffrement. L'algorithme est un algorithme de chiffrement symétrique par bloc, par exemple un algorithme de type AES (de l'anglais Advanced Encryption Standard) ou un algorithme de type SM4 issu de l'algorithme SMS4 (du chinois Shangyè Mima pour les initiales SM, qui signifie « Commercial Cipher » en anglais).

Lors d'un chiffrement selon un algorithme par bloc, la donnée à chiffrer est découpée en blocs de bits de même taille, par exemple des blocs de 128 bits pour l'AES ou le SM4. L'algorithme effectue ensuite une succession de tours, chaque tour appliquant une étape dite de confusion à l'aide d'une table de substitution (SBOX). La table de substitution est composée d'une opération d'inversion et d'au moins une opération linéaire. L'algorithme effectue ensuite une étape dite de diffusion constituée d'opérations linéaires. A chaque tour de l'algorithme, une sous-clé dérivée d'une unique clé de chiffrement, par exemple stockée dans la mémoire non volatile 13 du circuit 11, est utilisée. L'algorithme étant symétrique, l'unique clé de chiffrement permet le chiffrement de la donnée ainsi que son déchiffrement.

Les algorithmes de chiffrement par bloc sont sensibles aux attaques par canaux cachés ou auxiliaires (en anglais Side-Channel Attack). Les attaques par canaux cachés consistent à extraire, par exemple par l'intermédiaire de l'interface 15, des données du circuit 11 par interprétation d'informations, comme par exemple une consommation électrique, un temps de calcul ou encore un rayonnement électromagnétique. A titre d'exemple, une telle attaque consiste à corréler la consommation du circuit intégré exécutant l'algorithme avec des résultats de calcul faisant intervenir la clé de chiffrement utilisée par cet algorithme.

Une contre-mesure à ce type d'attaque consiste à masquer la donnée à chiffrer en l'additionnant ou en la multipliant avec, par exemple, une donnée aléatoire (un masque) générée par le générateur de nombres aléatoires 16. Ainsi, la donnée n'est jamais manipulée seule par l'algorithme de chiffrement. Néanmoins, si l'attaquant effectue une attaque du second ordre, c'est-à-dire combine deux mesures de consommation de courant observées sur le circuit pendant l'exécution de l'algorithme cryptographique, l'attaquant peut ainsi récupérer la donnée masquée ainsi que le masque, il lui est alors possible de « démasquer » la donnée sensible (que l'on ne souhaite pas rendre visible). De plus, l'état transitoire du circuit peut, s'il n'est pas maitrisé, contenir des états intermédiaires du traitement de la donnée par l'algorithme permettant à un attaquant d'en déduire la valeur de ladite donnée. Ce phénomène est appelé « glitch » en anglais.

Les modes de réalisation décrits prévoient une nouvelle contre-mesure aux attaques par canaux cachés de second ordre.

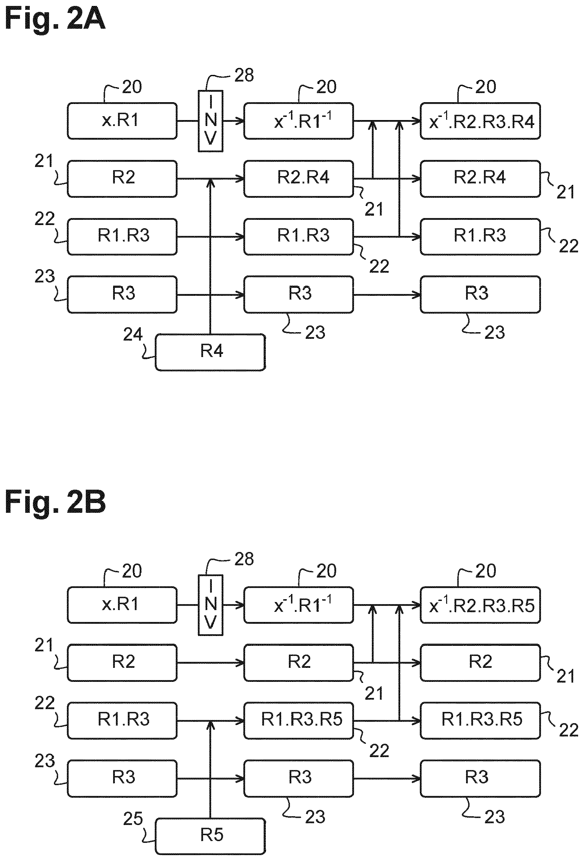

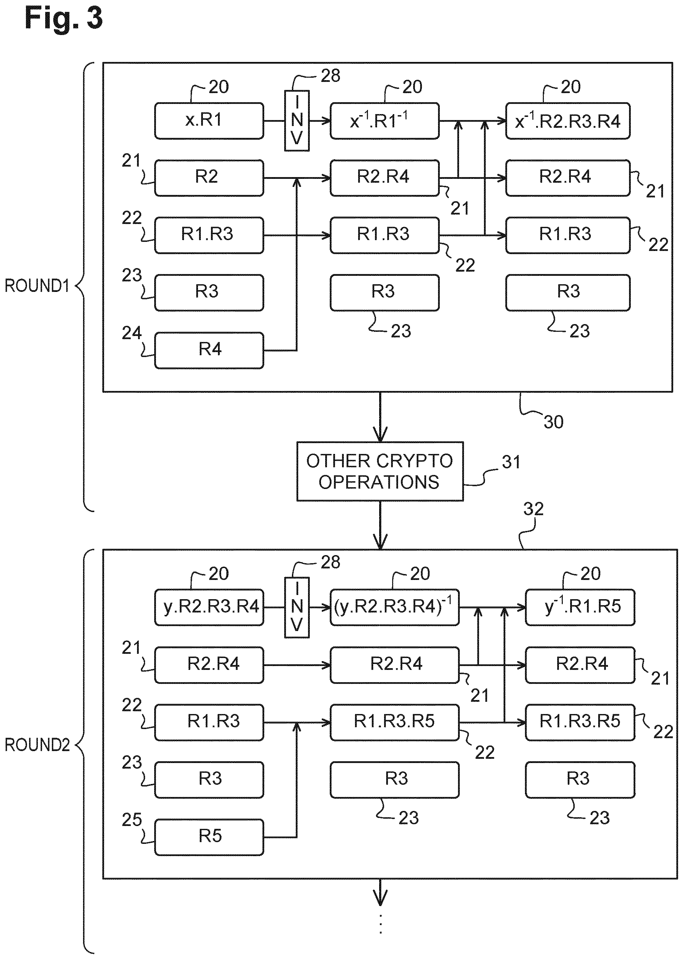

Les figures 2A, 2B et 3 présentent des blocs symbolisant des registres du circuit 11 dont le contenu est écrasé et remplacé par un nouveau contenu à chaque étape intervenant sur le contenu du registre.

La figure 2A représente de façon schématique et sous forme de blocs un exemple illustrant un mode de mise en œuvre du procédé décrit.

La figure 2A illustre un exemple d'une partie d'un tour d'un algorithme de chiffrement selon un mode de réalisation. Un mot ou code x, constituant la donnée à chiffrer ou texte en clair, est traité pour chiffrement par l'algorithme. Le mot ou code x contient un nombre de bits déterminé, par exemple 128 bits dans le cas des algorithmes de types AES.

Afin d'éviter que le texte en clair ne soit récupéré lors d'une attaque par canaux cachés, celui-ci est masqué, en amont de l'exécution de l'algorithme, par un premier masque R1. A titre d'exemple, le premier masque R1 est une valeur aléatoire de 128 bits générée par le générateur 16.

Une première donnée d'entrée $x.R_1$ de l'algorithme correspondant au mot x multiplié, modulo un polynôme irréductible P, par le premier masque R1, est stockée dans un premier registre 20. A titre d'exemple, lorsque l'algorithme exécuté est de type AES, le polynôme P considéré est le polynôme dit de Rijndael et est défini par

[Math 1]

$$P[X] = X^8 + X^4 + X^3 + X + 1.$$

De cette façon, l'algorithme ne manipule jamais le mot x seul. Néanmoins, si l'algorithme manipule le premier masque R1, une attaque de second ordre sur la première donnée d'entrée x.R1 et sur le premier masque R1 permet à l'attaquant de récupérer le mot x.

Selon un mode de réalisation, une deuxième donnée d'entrée, stockée dans un deuxième registre 21, représente un deuxième masque R2. Une troisième donnée d'entrée R1.R3, représentant le premier masque R1 masqué par un troisième masque R3, est stockée dans un troisième registre 22. Les deuxième et troisième données d'entrée sont par exemple des valeurs aléatoires de 128 bits générées par le générateur 16 en amont de l'exécution de l'algorithme. Le troisième masque R3 est stocké dans un registre 23.

Ainsi, l'algorithme ne manipule pas le premier masque R1 « seul ».

A titre d'exemple, la valeur du premier masque R1 est directement envoyée, après sa génération par le générateur 16 et par l'intermédiaire du bus 18, au processeur 12 pour masquage du texte en clair x sans être stockée dans une quelconque mémoire du circuit 11. On évite ainsi de véhiculer le masque R1 dans le circuit 11.

Afin de récupérer le texte en clair x, l'attaquant doit combiner les première et troisième données d'entrée x.R1 et R1.R3 ainsi que le troisième masque R3. Une attaque du second ordre n'est alors pas suffisante pour récupérer le texte en clair x.

Une fois les première, deuxième et troisièmes données d'entrée x.R1, R2 et R1.R3 fournies à l'algorithme, une étape 28 (INV) du tour de l'algorithme consiste à inverser, modulo le polynôme considéré, la première donnée d'entrée x.R1 dans un corps fini d'ordre $2^n$, n représentant l'ordre du polynôme P. L'inverse de la première donnée d'entrée x.R1 par l'application de l'étape 28 constitue une donnée $(x.R1)^{-1} = x^{-1}.R1^{-1}$ et est stockée dans le registre 20, écrasant la première donnée d'entrée x.R1 qui n'est alors plus présente dans le circuit 11.

Dans une autre étape, le générateur 16 génère un quatrième masque R4 qui est stocké dans un registre 24. Selon un mode de réalisation, une donnée R2.R4 est obtenue par masquage de la deuxième donnée d'entrée R2 par le quatrième masque R4 et est stockée dans le registre 21, écrasant la deuxième donnée d'entrée R2.

Suite à l'étape 28 et à l'obtention de la donnée R2.R4, une première donnée intermédiaire $x^{-1}.R2.R3.R4$ est obtenue par masquage de la donnée $x^{-1}.R1^{-1}$ par la donnée R2.R4 et par la donnée R1.R3. La première donnée intermédiaire $x^{-1}.R2.R3.R4$ est stockée dans le registre 20, écrasant la donnée $x^{-1}.R1^{-1}$.

La donnée R2.R4 contenue dans le registre 21 constitue une deuxième donnée intermédiaire. Les contenus des registres 22 et 23 (donc la troisième donnée d'entrée R1.R3 et le troisième masque R3) ne sont pas modifiés. Une troisième donnée intermédiaire correspond à la troisième donnée d'entrée R1.R3.

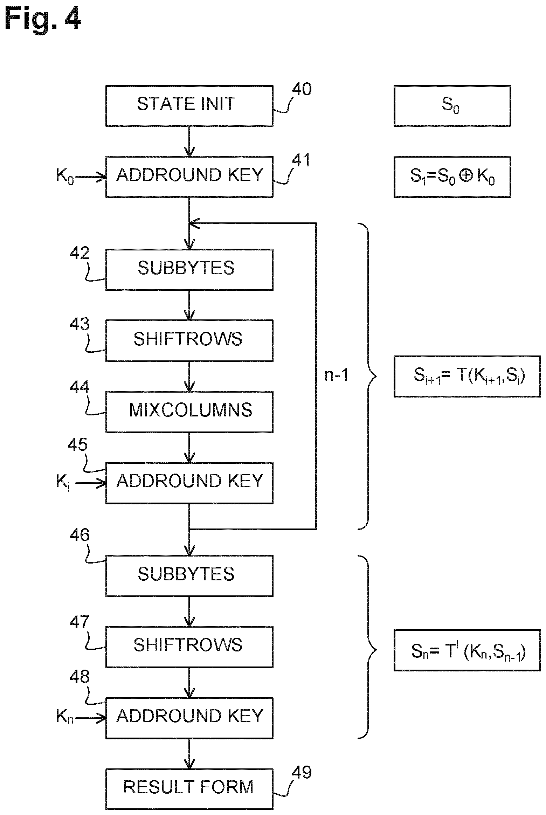

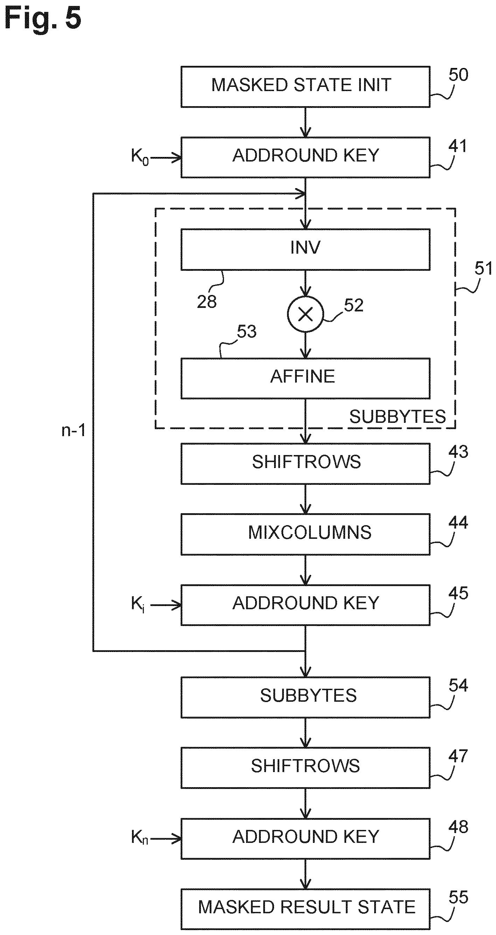

La première donnée intermédiaire $x^{-1}.R2.R3.R4$ constitue la donnée d'entrée à d'autres étapes de l'algorithme de chiffrement qui seront détaillées en figures 4 et 5. Les deuxièmes et troisièmes données intermédiaires R2.R4 et R1.R3 ainsi que le masque R3 restent stockées dans les registres 21, 22 et 23, par exemple pour démasquage ultérieur du texte chiffré.

La figure 2B représente de façon schématique et sous forme de blocs un autre exemple illustrant un mode de mise en œuvre du procédé décrit.

Le mode de réalisation illustré dans la figure 2B est similaire à celui de la figure 2A, à la différence près que le quatrième masque R4 est remplacé par un cinquième masque R5 stocké dans un registre 25. Le cinquième masque R5 est appliqué à la troisième donnée d'entrée R1.R3 et non plus à la deuxième donnée d'entrée R2. Une donnée R1.R3.R5 est alors obtenue et est stockée dans le registre 22, écrasant la troisième donnée d'entrée R1.R3. Une première donnée intermédiaire $x^{-1}.R2.R3.R5$ est obtenue par masquage de la donnée $x^{-1}R1^{-1}$ contenue dans le registre 20 par la deuxième donnée d'entrée R2 et par la donnée R1.R3.R5. La première donnée intermédiaire $x^{-1}.R2.R3.R5$ est stockée dans le registre 20, écrasant la donnée $x^{-1}R1^{-1}$.

Dans ce mode de réalisation, le contenu du registre 21 (donc la deuxième donnée d'entrée R2) n'est pas modifié, la deuxième donnée R2 constituant une deuxième donnée intermédiaire. La donnée R1.R3.R5 constitue une troisième donnée intermédiaire.

Comme en figure 2A, la première donnée intermédiaire $x^{-1}.R2.R3.R5$ constitue la donnée d'entrée à d'autres étapes de l'algorithme de chiffrement qui seront détaillées en figures 4 et 5. Les deuxièmes et troisièmes données intermédiaires R2 et R1.R3.R5 ainsi que le troisième masque R3 restent stockées dans des registres correspondants pour démasquage ultérieur du texte chiffré.

A titre d'exemple, on fixe par convention que le premier tour de l'algorithme est de rang 1 (ou plus généralement de rang impair) alors, lors de l'exécution de l'algorithme de chiffrement par tour, le mode de réalisation illustré par la figure 2A est appliqué lors des tours de rang impair et le mode de réalisation illustré par la figure 2B est appliqué lors des tours de rang pair. A chaque tour de rang impair, un masque R4 est généré par le générateur 16 est par exemple stocké dans le registre 24 puis est utilisé pour masquer la deuxième donnée d'entrée du tour. A chaque tour de rang pair, un autre masque R5 est généré par le générateur 16 et est stocké dans le registre 25 puis est utilisé pour masquer la troisième donnée d'entrée du tour.

Dans le cas où, par convention, le premier tour de l'algorithme est de rang 0 (ou plus généralement de rang pair), le mode de réalisation illustré par la figure 2A est appliqué lors des tours de rang pair et le mode de réalisation illustré par la figure 2B est appliqué lors des tours de rang impair.

La figure 3 est un organigramme représentant des étapes d'un mode de mise en œuvre du procédé décrit.

La figure 3 est décrite avec pour convention que le rang du premier tour de l'algorithme est impair.

Un premier tour (ROUND1) de l'algorithme de chiffrement commence, par exemple, dans une étape 30. L'étape 30 reprend le mode de réalisation illustré par la figure 2A sur des contenus des registres 20, 21 et 22. Le registre 20 contient une donnée x.R1. Le registre 21 contient une donnée R2. Le registre 22 contient une donnée R1.R3. Lors du premier tour, un masque R4 est généré par le générateur 16 et est stocké dans le registre 24. Suite à l'application du mode de réalisation illustré par la figure 2A, les registres 20, 21 et 22 contiennent (colonne de droite du bloc 30 en figure 3) respectivement des données $x^{-1}.R2.R3.R4$, R2.R4 et R1.R3.

Dans une étape 31 (OTHER CRYPTO OPERATIONS), postérieure à l'étape 30, des opérations cryptographiques, propres à l'algorithme de chiffrement utilisé sont appliquées sur le contenu du registre 20 qui est alors écrasé au profit d'une donnée y.R2.R3.R4.

Un deuxième tour (ROUND2) de l'algorithme commence, par exemple, dans une étape 32, postérieure à l'étape 31. L'étape 32 reprend le mode de réalisation illustré par la figure 2B. Toutefois, les données d'entrée de ce tour correspondent aux contenus courants des registres 20, 21, 22 et 23, soit les grandeurs y.R2.R3.R4, R2.R4, R1.R3 et R3.

La donnée y.R2.R3.R4 est alors inversée dans une réalisation de l'étape 28 et une donnée $(y.R2.R3.R4)^{-1}$ est stockée dans le registre 20, écrasant la donnée y.R2.R3.R4.

Un cinquième masque R5 est généré par le générateur de nombres aléatoires 16 et est stocké dans le registre 25. Le cinquième masque R5 est utilisé pour masquer le contenu du registre 22 (R1.R3) afin d'obtenir une donnée R1.R3.R5. La donnée R1.R3.R5 est stockée dans le registre 22 écrasant la donnée R1.R3 qui y était alors stockée.

Le contenu des registres 21 et 22 est alors utilisé pour masquer le contenu du registre 20 $((y.R2.R3.R4)^{-1})$. Une donnée $y^{-1}.R1.R5$ est ainsi obtenue et stockée dans le registre 20, écrasant la donnée $(y.R2.R3.R4)^{-1}$. Le contenu du registre 20 ne dépend alors plus du quatrième masque R4 généré lors du premier tour de l'algorithme.

Le deuxième tour de l'algorithme se poursuit par exemple dans une nouvelle réalisation de l'étape 31 sur le contenu du registre 20.

Dans le cas où un troisième tour de l'algorithme a lieu, une nouvelle valeur du masque R4 générée par le générateur 16 est stockée dans le registre 24 ce qui écrase la valeur précédente. Cette nouvelle valeur est par exemple utilisée pour masquer le contenu du registre 21 de la manière décrite en relation avec la figure 2A ou avec le bloc 30.

Selon un mode de réalisation, les valeurs générées par le générateur 16 sont utilisées en alternance des tours pour masquer soit le contenu du registre 21 soit le contenu du registre 22.

Selon un mode de réalisation, un contenu (R3) du registre 23 reste le même durant le déroulement entier de l'algorithme.

Selon un mode de réalisation, l'algorithme effectue une pluralité de tours et suite à un dernier tour, le registre 20 fournit un résultat y masqué. Ce masque dépend de la parité du dernier tour et est, soit une combinaison multiplicative du contenu du registre 21 et du masque R3, soit une combinaison multiplicative du contenu du registre 22 avec la valeur inverse du masque R3. Afin d'obtenir la valeur du résultat y, un démasquage du contenu du registre 20 est effectué. Le démasquage s'effectue alors par combinaison multiplicative du contenu du registre 20, soit avec les valeurs inverses des contenus des registres 21 et 23, soit avec la valeur inverse du contenu du registre 22 et le contenu du registre 23. La combinaison multiplicative qui permet le démasquage du résultat dépend alors du rang du dernier tour.

La figure 4 est un schéma-bloc illustrant un exemple d'algorithme de chiffrement du type auquel s'applique les modes de réalisations décrits.

Plus particulièrement, la figure 4 illustre, par un organigramme simplifié, les étapes principales d'un algorithme de type AES. On se contentera de décrire le chiffrement, le déchiffrement reprenant les transformations inverses. Pour plus de détails, on pourra se référer à l'ouvrage "The Design of Rijndael" de Joan Daemen et Vincent Rijmen, paru aux éditions Springer-Verlag (ISBN 3-540-42580-2) et à la norme AES (FIPS PUB 197).

Cet algorithme chiffre un texte en clair $S_0$ d'un nombre de bits prédéterminé (128 bits) en texte chiffré $S_n$ de même taille. Le chiffrement et le déchiffrement reposent sur une clé secrète dont la longueur (128, 192 ou 256 bits) conditionne le nombre de tours de l'algorithme (respectivement 10, 12 ou 14 tours).

Selon un mode de réalisation, un algorithme de type AES est appliqué à des textes en clair de 128 bits découpés en octets, ce qui correspond au cas le plus fréquent.

En pratique, chaque étape d'un algorithme de type AES traite une matrice de quatre lignes et quatre colonnes, représentant un mot, et dont chaque élément est un octet. Pour simplifier la description qui va suivre, on fera référence, pour chaque étape, à un état considéré comme étant une matrice.

Pour la mise en œuvre de l'algorithme de chiffrement ou de déchiffrement, on produit, à partir de la clé secrète sur 128, 192 ou 256 bits, n sous-clés comprenant 128 bits, n étant égal à 11, 13 ou 15 selon la taille de la clé secrète. Chaque sous-clé est destinée à être utilisée par l'algorithme lors d'un tour.

Le procédé commence à un état initial (bloc 40, STATE INIT) So du texte en clair.

Une première phase du procédé de chiffrement est une opération (bloc 41, ADDROUNDKEY) qui consiste à effectuer une combinaison de type Ou Exclusif (XOR) de l'état initial $S_0$ avec une première sous-clé $K_0$. On obtient un premier état intermédiaire $S_1$.

Une deuxième phase du procédé de chiffrement consiste à effectuer plusieurs tours d'une même transformation T faisant intervenir, à chaque tour, l'état $S_{i-1}$ obtenu au tour précédent et une sous-clé courante $K_i$. Le nombre de tours de transformation T correspond à n-1, c'est-à-dire au nombre n+1 de sous-clés dérivées, diminué de 2.

Chaque transformation de tour T est constituée de quatre opérations appliquées successivement.

Une première opération (bloc 42, SUBBYTES) de la transformation de tour T constitue une transformation non linéaire dans laquelle chaque octet de la matrice constituant l'état courant est remplacé par son image, généralement prise dans une table de substitution (SBOX) précalculée ou calculée à la volée. La table de substitution SBOX est par exemple obtenue par deux transformations combinées. Une première transformation (bloc 28 figure 2A et 2B, INV) consiste à inverser l'octet considéré dans le corps fini d'ordre $2^8$ modulo le polynôme P irréductible, l'octet 00 constituant sa propre image. Cette inversion est par exemple suivie d'une transformation affine.

Une deuxième opération (bloc 43, SHIFTROWS) consiste à opérer une rotation sur les trois dernières lignes de la matrice. La première ligne de la matrice demeure inchangée. La deuxième ligne subit une rotation d'un octet. La troisième ligne subit une rotation de deux octets. La quatrième ligne subit une rotation de trois octets.

Selon des modes de réalisation, la deuxième opération peut être effectuée avant la première opération.

Une troisième opération (bloc 44, MIXCOLUMNS) de la transformation de tour T consiste à considérer chaque colonne de la matrice issue des première et deuxième opérations comme un polynôme de quatre termes, et à multiplier chacun de ces polynômes par un polynôme M modulo un autre polynôme Q.

Une quatrième et dernière opération (bloc 45, ADDROUNDKEY) de la transformation de tour T de rang i consiste à appliquer la sous-clé $K_i$ à la matrice résultante des opérations précédentes. Chaque octet de la matrice est combiné par un Ou-Exclusif à la sous clé $K_i$. Cette opération 45 est la même que l'opération 41 de la première phase du chiffrement, mais effectuée avec une sous-clé différente.

A l'issue de l'opération 45, on obtient pour un tour de rang i, un état $S_{i+1}=T(K_{i+1}, Si)$. Les quatre opérations de la transformation T de tour sont répétées n-1 fois, c'est-à-dire qu'après l'opération 45, on revient à l'opération 42 pour réeffectuer un tour avec une sous-clé suivante.

La troisième phase de l'algorithme de chiffrement AES consiste à reproduire les opérations de la transformation de tour à l'exception de la troisième (bloc 44, MIXCOLUMNS). En figure 4, on a illustré ce dernier tour par des blocs 46, 47 et 48 reprenant les opérations des blocs 42, 43 et 45 décrites précédemment avec, comme clé pour l'opération 48, la dernière sous-clé $K_n$.

On obtient alors l'état $S_n=T'(K_n, S_{n-1})$. Ce résultat est le cas échéant mis en forme (bloc 49, RESULT FORM) pour utilisation ultérieure.

La figure 5 est un schéma-bloc illustrant un exemple d'application, par l'algorithme illustré en figure 4, des modes de réalisations décrits.

La figure 5 est décrite avec pour convention que le rang du premier tour de l'algorithme est impair.

Plus particulièrement, la figure 5 illustre la mise en œuvre du procédé décrit dans les figures 2A, 2B et 3 dans un algorithme de type AES.

Le procédé commence à un état initial (bloc 50, MASKED STATE INIT) dans lequel le contenu du registre 20 est un texte en clair masqué, par exemple la donnée x.R1. Les registres 21, 22 et 23 contiennent par exemple respectivement les données R2, R1.R3 et R3. A titre d'exemple, les données contenues dans les registres 20, 21, 22 et 23 sont sur 128 bits.

Selon un mode de réalisation, les contenus des registres 20, 21, 22 et 23 sont découpés en octets constituant une matrice de quatre lignes et quatre colonnes. Pour simplifier la description qui va suivre, on fera référence, pour chaque étape, à un état considéré comme étant une matrice.

Une première phase du procédé de chiffrement est l'opération (bloc 41, ADDROUND KEY) effectuant une combinaison de type Ou Exclusif (XOR) du contenu du registre 20, par exemple la première donnée d'entrée x.R1, avec la première sous-clé $K_0$. Cette nouvelle donnée est stockée dans le registre 20 écrasant le contenu précédent.

Lors de l'exécution d'un algorithme de type AES usuel décrit en relation avec la figure 4, le premier tour commence par une deuxième opération (bloc 51, SUBBYTES) non linéaire dans laquelle chaque octet de la matrice de l'état courant est remplacé par son image, généralement prise dans une table de substitution (SBOX). Généralement la table de substitution SBOX peut être obtenue par deux transformations combinées. La première transformation 28 (INV) consiste, pour un algorithme de type AES, à inverser les octets considérés (les éléments de la matrice de l'état courant contenus dans le registre 20) dans le corps fini d'ordre $2^8$ modulo le polynôme P de Rijndael. Cette inversion est suivie d'une transformation affine (bloc 53, AFFINE).

Selon les modes de réalisation décrits ici, une étape intermédiaire 52, postérieure à l'opération 28 et antérieure à la transformation affine est réalisée. L'étape 52 consiste en la génération d'un masque (R4 ou R5) par le générateur 16, par exemple stocké lors de ce premier tour dans le registre 24, et au masquage du contenu du registre 21 par ce masque. L'étape 52 consiste ensuite au masquage des octets préalablement inversés contenus dans le registre 20 par le contenu des registres 21 et 22. A ce stade du premier tour, le registre 20 contient alors, par exemple, une donnée x $^{-1}$.R2.R3.R4. La transformation affine 53 est ensuite effectuée sur le contenu du registre 20.

Le procédé usuel d'un tour de l'algorithme de type AES reprend sur le contenu du registre 20. Autrement dit, les transformations 43, 44 et 45 sont appliquées, dans cet ordre, au contenu du registre 20 afin d'obtenir, par exemple, une donnée y.R2.R3.R4.

A titre d'exemple, lorsque le premier tour de l'algorithme s'achève, le registre 20 contient la donnée y.R2.R3.R4, le registre 21 contient la donnée R2.R4 et le registre 22 contient la donnée R1.R3. Les registres 23 et 24 contiennent, quant à eux, respectivement les masques R3 et R4.

L'algorithme reprend à l'étape 51. Lors de la réalisation de l'étape 52 du deuxième tour, un nouveau masque généré par le générateur 16 est stocké, par exemple, dans le registre 25 et est utilisé pour masquer le contenu du registre 22.

L'algorithme se poursuit en une succession de n-1 tours, comprenant, dans cet ordre, les opérations 51, 43, 44 et 45. A chaque réalisation de l'étape 52 lors d'un tour de rang impair, une nouvelle valeur aléatoire, générée par le générateur 16, est stockée dans le registre 24 et est utilisée pour masquer le contenu du registre 21. A chaque réalisation de l'étape 52 lors d'un tour de rang pair, une nouvelle valeur aléatoire, générée par le générateur 16 est stockée dans le registre 25 et est utilisée pour masquer le contenu du registre 22.

Une fois le (n-1)ième tour achevé, l'algorithme continue dans une opération 54 (SUBBYTES) identique en termes de fonctionnement à l'opération 51. Les opérations 47 puis 48 font suite à l'opération 54.

Le registre 20 contient alors un état final masqué (bloc 55, MASKED FINAL STATE). Pour obtenir le mot chiffré non masqué, il est nécessaire de connaitre le contenu des registres 20 et 23 (R3), ainsi que celui d'au moins un des registres 21 ou 22. En effet, lorsque le nombre de tours effectué est pair, le mot chiffré non masqué s'obtient par multiplication du contenu du registre 20 avec le contenu du registre 23 et avec l'inverse du contenu du registre 22. Lorsque le nombre de tours effectué est impair, le mot chiffré non masqué s'obtient par multiplication du contenu du registre 20 avec l'inverse des contenus des registres 22 et 23.

Un avantage des modes de réalisation décrits est qu'ils rendent l'algorithme résistant face à des attaques par canaux cachés du deuxième ordre.

Un autre avantage des modes de réalisation décrits est qu'ils ne dépendent pas du polynôme P modulo lequel les octets sont multipliés.

Un autre avantage des modes de réalisation décrits vient du fait, qu'à chaque tour, une unique valeur aléatoire est générée ce qui réduit le nombre de registres utilisés lors de l'exécution de l'algorithme.

Un autre avantage des modes de réalisation décrits est que l'on protège l'opération d'inversion.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits, en particulier, le type d'algorithme de chiffrement par blocs utilisé ainsi que la mise en œuvre des opérations cryptographiques propres à l'algorithme de chiffrement sont à la portée de la personne du métier à partir des indications fonctionnelles données ci-dessus.

**Revendications**

1. Procédé de protection d'une première donnée (x) à laquelle est appliquée un algorithme cryptographique, exécuté par un processeur (12), dans lequel ledit algorithme est un algorithme par tour, chaque tour traitant des contenus de premier, deuxième et troisième registres (20, 21, 22), comprenant :

   - le masquage du contenu du deuxième registre (21), lors des tours d'une première parité, par le contenu d'un quatrième registre (24) ;
   - le masquage du contenu du troisième registre (22), lors des tours d'une deuxième parité, par le contenu d'un cinquième registre (25) ;
   - le masquage du contenu du premier registre (20) par le contenu des deuxième et troisième registres.

2. Procédé selon la revendication 1, dans lequel les contenus des premier, deuxième et troisième registres (20,21,22) pour le premier tour sont, respectivement :

- ladite première donnée (x) masquée par un premier masque (R1) ;
- un deuxième masque (R2) ; et
- le premier masque (R1) masqué par un troisième masque (R3), le troisième masque étant stocké dans le sixième registre (23).

3. Procédé selon la revendication 1 ou 2, dans lequel le contenu du premier registre (20) suite à l'exécution du dernier tour fournit un résultat masqué de l'application de l'algorithme à la première donnée (x).

4. Procédé selon l'une quelconque des revendications 1 à 3, dans lequel, pour chaque tour de première parité, un quatrième masque (R4) est généré par un générateur aléatoire (16) et est stocké dans le quatrième registre (24) et pour chaque tour de deuxième parité, un cinquième masque (R5) est généré par le générateur (16) et est stocké dans le cinquième registre (25).

5. Procédé selon l'une quelconque des revendications 1 à 4, dans lequel, pour chaque tour, avant d'être masqué par les contenus des deuxième et troisième registres (21, 22), le contenu du premier registre (20) est inversé modulo un polynôme premier.

6. Procédé selon la revendication 5, dans lequel, pour chaque tour, suite au masquage du premier registre (20) par les contenus des deuxième et troisième registres (21, 22), des opérations cryptographiques sont effectuées sur le contenu du premier registre (20).

7. Procédé selon la revendication 5 ou 6, dans lequel, à chaque tour, l'inversion du contenu du premier registre (20) est mise en œuvre par une implémentation à seuil par boîtes.

8. Procédé selon l'une quelconques des revendications 5 à 7, dans lequel le polynôme premier modulo lequel est calculé l'inverse du contenu du premier registre (20) est fonction de l'algorithme mis en œuvre.

9. Procédé selon l'une quelconque des revendications 1 à 8, dans lequel, les tours de première parité sont les tours de rang impair et les tours de deuxième parité sont les tours de rang pair.

10. Procédé selon l'une quelconque des revendications 1 à 8, dans lequel, les tours de première parité sont les tours de rang pair et les tours de deuxième parité sont les tours de rang impair.

11. Procédé selon l'une quelconques des revendications 1 à 10, dans lequel en sortie du dernier tour, le premier registre (20) contient une deuxième donnée (y) masquée par un sixième masque.

12. Procédé selon la revendication 11, dans lequel la deuxième donnée (y) correspond à la première donnée (x) chiffrée.

13. Procédé selon la revendication 11 ou 12, dans lequel le sixième masque est une combinaison multiplicative du troisième masque (R3) avec le contenu du deuxième registre (21) ou de l'inverse du troisième masque (R3) avec le contenu du troisième registre (22), selon que le dernier tour soit de première ou de deuxième parité.

14. Procédé selon l'une quelconques des revendications 1 à 13, dans lequel l'algorithme cryptographique utilisé est l'AES.

15. Procédé selon l'une quelconques des revendications 1 à 13, dans lequel l'algorithme cryptographique utilisé est le SM4.

16. Processeur mettant en œuvre un algorithme cryptographique par tour configuré pour protéger une première donnée (x), chaque tour traitant des contenus de premier, deuxième et troisième registres (20, 21, 22), le processeur étant configuré pour :

- masquer le contenu du deuxième registre (21), lors des tours d'une première parité, par le contenu d'un quatrième registre (24) ;
- masquer le contenu du troisième registre (22), lors des tours d'une deuxième parité, par le contenu d'un cinquième registre (25) ;
- masquer le contenu du premier registre (20) par le contenu des deuxième et troisième registres (21, 22).

# Fig. 1

# Fig. 2A

# Fig. 2B

# Fig. 3

# Fig. 4

STATE INIT — 40

$S_0$

$K_0 \rightarrow$ ADDROUND KEY — 41

$S_1 = S_0 \oplus K_0$

42 — SUBBYTES

43 — SHIFTROWS

44 — MIXCOLUMNS

45 — $K_i \rightarrow$ ADDROUND KEY

n-1

$S_{i+1} = T(K_{i+1}, S_i)$

46 — SUBBYTES

47 — SHIFTROWS

48 — $K_n \rightarrow$ ADDROUND KEY

$S_n = T^I(K_n, S_{n-1})$

RESULT FORM — 49

# Fig. 5

```
         ┌─────────────────────────┐  50
         │   MASKED STATE INIT     │
         └─────────────────────────┘
                     │
                     ▼
         ┌─────────────────────────┐  41
K₀ ───▶ │      ADDROUND KEY       │
         └─────────────────────────┘
                     │
      ┌──────────────┤
      │   ┌ ─ ─ ─ ─ ─ ┼ ─ ─ ─ ─ ─ ─ ─ ┐
      │   │   ┌────────▼────────┐       │  51
      │   │   │       INV       │       │
      │   │   └─────────────────┘       │
      │   │      28      │               │
      │   │           ┌──▼──┐            │
      │   │           │  ✕  │ 52        │
      │   │           └──┬──┘            │
      │   │   53         │               │
      │   │   ┌──────────▼──────┐       │
      │   │   │     AFFINE      │       │
      │   │   └─────────────────┘       │
      │   │              SUBBYTES       │
      │   └ ─ ─ ─ ─ ─ ─ ┼ ─ ─ ─ ─ ─ ─ ─ ┘
  n-1 │   ┌─────────────▼───────┐  43
      │   │      SHIFTROWS      │
      │   └─────────────────────┘
      │              │
      │   ┌──────────▼──────────┐  44
      │   │     MIXCOLUMNS      │
      │   └─────────────────────┘
      │              │
      │   ┌──────────▼──────────┐  45
Kᵢ ──┼─▶│     ADDROUND KEY     │
      │   └─────────────────────┘
      └──────────────┤
                     ▼
         ┌─────────────────────────┐  54
         │       SUBBYTES          │
         └─────────────────────────┘
                     │
                     ▼
         ┌─────────────────────────┐  47
         │       SHIFTROWS         │
         └─────────────────────────┘
                     │
                     ▼
         ┌─────────────────────────┐  48
Kₙ ───▶ │      ADDROUND KEY       │
         └─────────────────────────┘
                     │
                     ▼
         ┌─────────────────────────┐  55
         │   MASKED RESULT STATE   │
         └─────────────────────────┘
```

Europäisches
Patentamt

European
Patent Office

Office européen
des brevets

# RAPPORT DE RECHERCHE EUROPEENNE

Numéro de la demande

**EP 22 18 0067**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/150070 A1 (SATPATHY SUDHIR [US]) 20 mai 2021 (2021-05-20) * alinéas [0153], [0161]; figure 11 * ----- | 1-16 | INV. H04L9/06 H04L9/00 |
| X | EP 2 637 349 A2 (TOSHIBA KK [JP]) 11 septembre 2013 (2013-09-11) * alinéas [0002], [0055] – [0063], [0071]; figure 11 * ----- | 1-16 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Munich | 24 novembre 2022 | Billet, Olivier |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 18 0067

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-11-2022

| Document brevet cité au rapport de recherche | | Date de publication | Membre(s) de la famille de brevet(s) | | Date de publication |
|---|---|---|---|---|---|
| US 2021150070 | A1 | 20-05-2021 | AUCUN | | |
| EP 2637349 | A2 | 11-09-2013 | EP | 2637349 A2 | 11-09-2013 |
| | | | JP | 5711681 B2 | 07-05-2015 |
| | | | JP | 2013186157 A | 19-09-2013 |
| | | | US | 2013236005 A1 | 12-09-2013 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Littérature non-brevet citée dans la description**

- **JOAN DAEMEN ; VINCENT RIJMEN.** The Design of Rijndael. Springer-Verlag